# EUROPEAN PATENT APPLICATION

(11) **EP 3 855 000 A1**
(43) Date of publication of application: **28.07.2021**
(21) Application number: 21153519.0
(22) Date of filing: 26.01.2021
(51) Int. Cl.: F01N 3/10, F01N 13/18

(54) **IMPROVED DIESEL OXIDATION CATALYSTS MODULE FOR A WORK VEHICLE**

(30) Priority: 27.01.2020 IT 202000001522
(71) Applicant: CNH Industrial Italia S.p.A., 10135 Torino (IT)
(72) Inventor: Loprevite, Mauro, CAP 10099 San Mauro Torinese (TO) (IT); Martucci, Vito, 10034 Chivasso (TO) (IT)
(74) Representative: CNH Industrial IP Department

(57) **Abstract**

Diesel Oxidation Catalysts, DOC, module (1) comprising a housing (2) defining a first opening (3) and a second opening (4) configured to be fluidly connected to other operative modules of an Air Treatment System, ATS, of a work vehicle, such housing (2) comprising a first portion (2a) and a second portion (2b) configured to move relatively one with respect to each other about at least two degrees of freedom, the first opening (3) being defined by the first portion (2a) and the second opening (4) being defined by the second portion (2b).

## Description

### TECHNICAL FIELD

The present invention concerns a Diesel Oxidation Catalysts (DOC) module, in particular a DOC module for a work vehicle.

### BACKGROUND OF THE INVENTION

Diesel vehicles, in particular work vehicles, need to treat exhaust gases coming from the engine before their emission in the environment in order to decrease level of pollute elements such as nitrogen oxide or particulate.

In order to achieve such treatment, it is known to use systems known as After Treatment Systems (ATS) comprising a series of elements among which the so-called Diesel Oxidation Catalysts (DOC).

DOC modules for work vehicles are usually housed into big cylindrical housing firmly fixed to the vehicle's body to avoid any possible movement.

Such housing comprises an inlet and an outlet, each fluidly connectable to respective upstream and downstream operative modules of the ATS of the work vehicle. The inlet and the outlet are connected to the respective module via tubes that can be equipped with bellow hoses for sake of dampening vibrations.

However, it may happen that the positions of the tubes and the inlet/outlet cannot precisely match and therefore the mounting of these latter elements can be difficult.

Furthermore, in such case, the mounting may be executed by deforming the bellow hoses affecting their durability and functionality.

In view of the above, the need is felt to provide a DOC module configured to be easily and quickly connected to the other operative modules of and ATS system of a work vehicle.

An aim of the present invention is to satisfy the above mentioned needs in a cost effective and optimized way.

### SUMMARY OF THE INVENTION

The aforementioned aim is reached by a DOC module and a work vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:

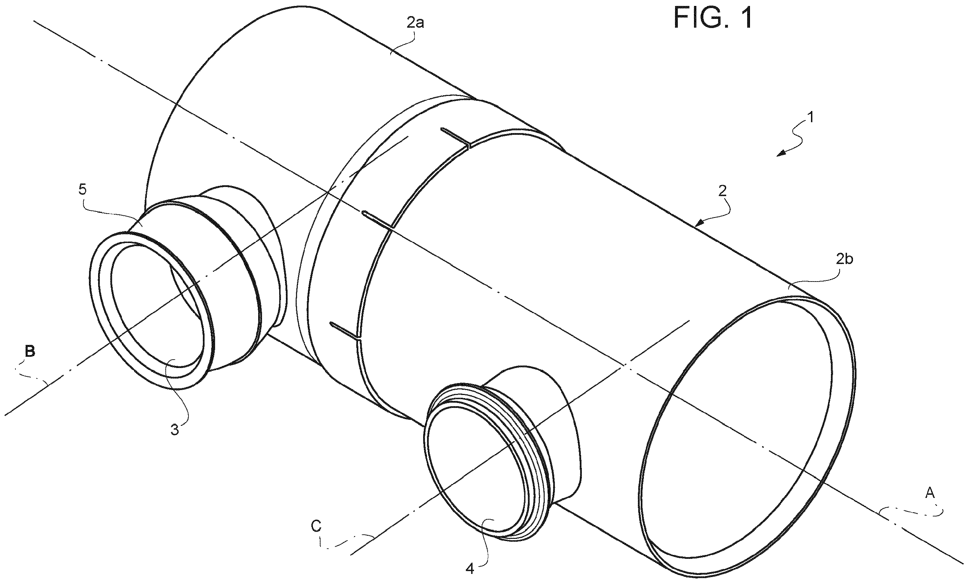

- Figure 1 is a perspective view of a DOC module according to the present invention;
- Figures 2A to 2C are lateral views of the DOC module of figure 1 in different configurations;
- Figures 3A to 3C are top views of the DOC module of figure 1 in further different configurations; and
- Figures 4A to 4C are lateral views of the DOC module of figure 1 in further different configurations.

### DETAILED DESCRIPTION OF THE INVENTION

Reference 1 globally indicates a Diesel Oxidation Catalysts (DOC) module according to the present invention for a work vehicle (not shown), such DOC module 1 essentially comprises a housing 2 configured to be fixed to a body of the work vehicle.

In the exemplarily disclosed embodiment, the housing 2 has a substantially cylindrical hollow shape extending along a longitudinal axis A and defining therefore an inner volume configured to house the known DOC chemical elements, not described herein for sake of brevity and being unrelated to the present invention.

The housing 2 defines a pair of openings, in particular a first opening 3 and a second opening 4 each configured to be coupled with a respective tube/hose to be connected to other After Treatment Systems (ATS) modules of the work vehicle, such as urea mixing module or Diesel Particulate Filters (DPF) or Selective Catalytic Reduction (SCR).

In particular, first and second openings 3 and 4 are both circular openings defined about respective center axis B and C.

According to a first aspect of the present invention, the housing 2 is divided into two portions configured to move relatively along the longitudinal axis A, each portion defining one the above mentioned openings 3, 4. Accordingly, the housing is divided into a first portion 2a configured to define the first opening 3 and a second portion 2b configured to define the second opening 4.

In particular, the first portion 2a defines an outer surface which is dimensioned to contain an inner surface defined by the second portion 2b of the housing 2, so that, said second portion 2b can slide with respect to said first portion 2a to be at least partially contained inside the inner volume delimited by this latter.

Preferably, the first portion 2b defines an external diameter that is lower with respect to the internal diameter of the second portion 2a so that the second portion may slide along axis A on said first portion.

Preferably, the sliding between the first and second portions 2a, 2b is a frictional sliding so as to avoid gas leakage between portions 2a, 2b.

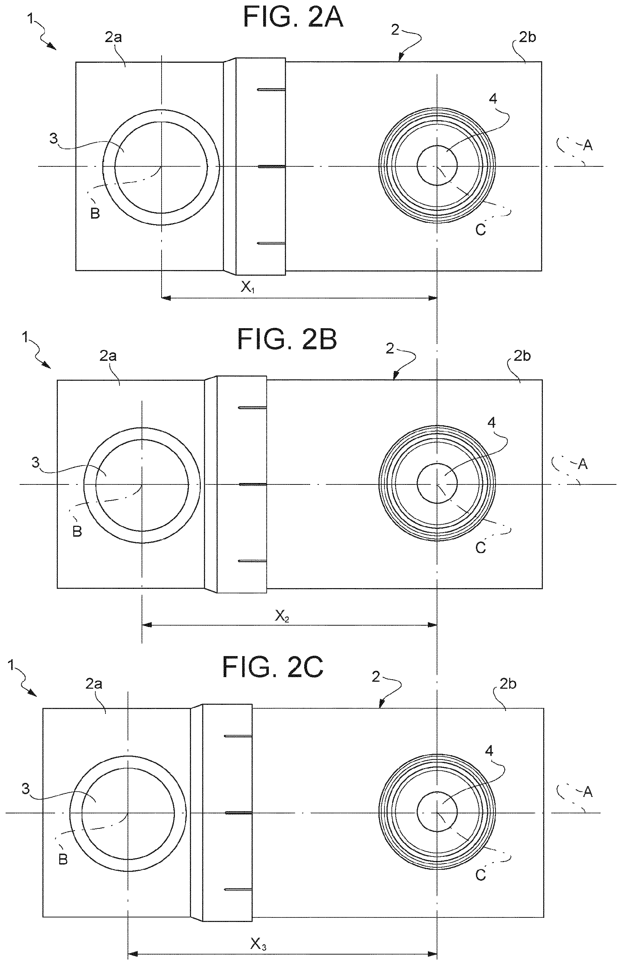

Figures 2A to 2C show different possible relative longitudinal dispositions of first and second portions 2a, 2b. In particular, according to figure 2A, the first opening 3 realized in first portion 2a is placed at a distance X₁ with respect to the second opening 4 realized in second portion 2b. In figure 2B, the first opening 3 is placed at a distance X₂ with respect to the second opening 4, greater with respect to X₁ and in figure 2C the first opening 3 is placed at a distance X₃ with respect to the second opening 4, greater with respect to X₂.

According to a second aspect of the present invention, the two portions 2a, 2b are furthermore configured to move about longitudinal axis A, i.e. to vary their relative angular position.

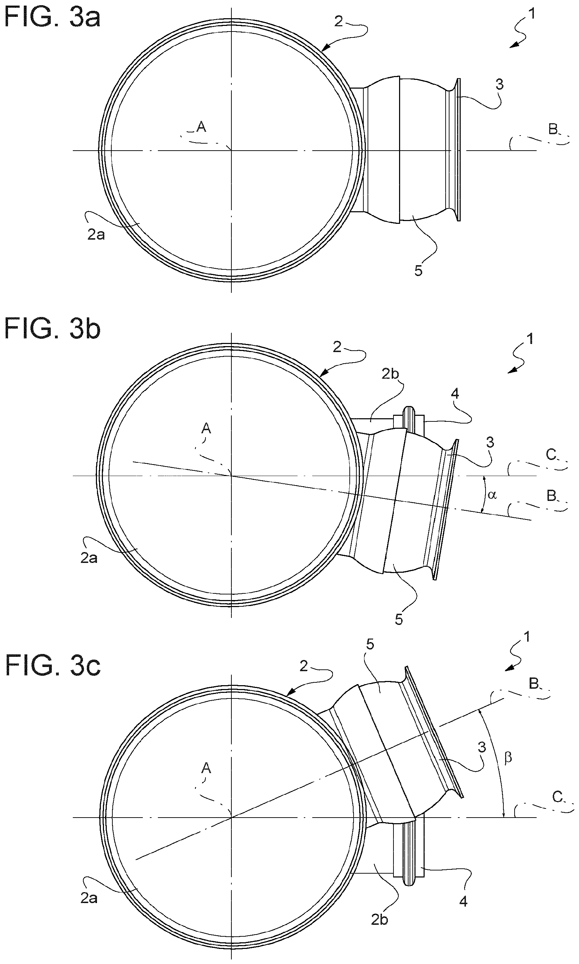

Figures 3A to 3C show different possible relative angular disposition of first and second portions 2a, 2b. In particular, according to figure 3A, the first opening 3 realized in first portion 2a without angular displacement with respect to second opening 4 realized in second portion 2b, i.e. axis B and C of openings 3 and 4 are parallel. In figure 3B, the axis B first opening 3 is placed at an angular distance α with respect to axis C of the second opening 4, and in figure 3C the axis B first opening 3 is placed at an angular distance β with respect to axis C of the second opening 4, such angular distance is different with respect to angular distance α of figure 3B.

According to a third aspect of the present invention, at least one opening 3, 4 can be provided with a two rotational degree joint 5 configured to vary the position of center axis B, C defined by the respective opening 3, 4. In particular, such joint 5 can be a ball joint defining the respective opening 3, 4 and housed in the respective portion 2a, 2b of the housing.

According to the exemplarily disclosed embodiment, the joint 5 is configured to allow the movement of the center axis B, C defined by the respective opening 3, 4 can be moved to be inclined with respect to its original position, perpendicular and coplanar to longitudinal axis A in a transversal and sagittal plane of housing 2. Furthermore, in the exemplarily embodiment, only first portion 2a is provided with such joint 5, which consequently defines first opening 3.

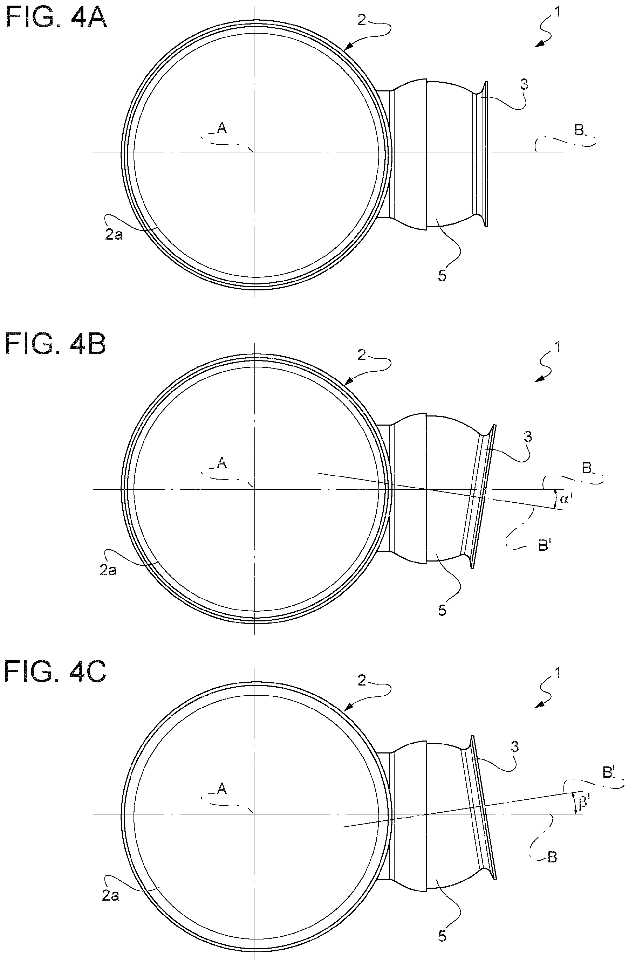

Figures 4A to 4C show different possible relative angular disposition of joint 5 with respect to housing 2. In particular, according to figure 3A, the center axis B defined by opening 3 realized in joint 5 is parallel to center axis C of opening 4 which is fix. In figure 4B, the joint 5 is displaced so that the center axis B' defined by opening 3 is placed at an angular distance α with respect to original position of center axis B while in figure 4C the joint 5 is displaced so that the center axis B' defined by opening 3 is placed at an angular distance β with respect to original position of center axis B, such angular distance is different with respect to angular distance α of figure 4B.

Furthermore, the DOC module 1 comprises locking means (not shown) configured to selectively lock the configuration reached between portions 2a, 2b of the housing 2 and preferably, also of joint 5 with respect to housing 2. For sake of example, such locking means may comprise shape coupling means, threaded means or friction engaging means such as strips or metal collars to be fitted about outer surface of portions 2a, 2b.

When locking together portions 2a and 2b of housing 2, they realized an air-tight connection between these latter so as to avoid any passage of the exhaust gas to the environment.

The operation of the above described DOC module 1 is the following.

The operator can adjust the longitudinal position about longitudinal axis A of the two portions 2a, 2a, the angular relative distance about axis A of these latter and modify the position of center axis B,C of at least one of openings 3, 4 with respect to longitudinal axis A to compensate possible variation of designed dimension in the tubes that needs to be connected to the DOC module 1. Accordingly, the DOC module 1 may be fitted according to the current position of the tubes to be connected and, then, the two portions 2a, 2b can be fixed one with respect to the other thanks to the mentioned locking means to fix the reached configuration and to finally fix the DOC module 1 to vehicle's body.

In view of the foregoing, the advantages of the DOC module 1 according to the invention are apparent.

Thanks to the proposed housing 2 made of two portions 2a, 2b which moves with different degrees of freedom one with respect to the other, it is possible to provide a versatile module 1.

In particular, the module 1 may be adjusted according to the current mounting situation on the work vehicle taking into account possible displacement of tubes and hoses.

Furthermore, the proposed module 1 may be used for different typologies of work vehicles, thereby allowing scales economies.

It is clear that modifications can be made to the described DOC module 1 which do not extend beyond the scope of protection defined by the claims.

For example the housing 2 and the openings 3, 4 may have different shapes with respect to the described one. If needed, the housing 2 could be divided into more than two portions 2a, 2b.

Moreover, the described degrees of freedom of the two portions 2a, 2b can be realized in a different way or only in part. Similarly, the joint 5 may be of any typology.

## Claims

1. Diesel Oxidation Catalysts, DOC, module (1) comprising a housing (2) defining a first opening (3) and a second opening (4) configured to be fluidly connected to other operative modules of an Air Treatment System, ATS, of a work vehicle, such housing (2) comprising a first portion (2a) and a second portion (2b) configured to move relatively one with respect to each other about at least two degrees of freedom, said first opening (3) being defined by said first portion (2a) and said second opening (4) being defined by said second portion (2b).

2. DOC module according to claim 1, wherein said at least two degrees of freedom comprises a translational movement along a longitudinal axis (A) of said housing (2).

3. DOC module according to claim 1 or 2, wherein said at least two degrees of freedom comprises a rotational movement about a longitudinal axis (A) of said housing (2).

4. DOC module according to any of the preceding claims, wherein at least one between said first and second portions (2a, 2b) comprises a joint (5) carried by the respective portion (2a; 2b) with at least two degrees of freedom, said joint (5) defining the respective opening (3, 4) of said portion (2a, 2b).

5. DOC module according to claim 4, wherein said joint (5) is a ball joint.

6. DOC module according to any of the preceding claims, wherein one between said portions (2a, 2b) defines an outer surface and the other between said portions (2a, 2b) defines an inner surface, said inner and outer surfaces being dimensioned so that the one between said portions (2a, 2b) can slide within said the other between said portions (2a, 2b).

7. DOC module according to any of the preceding claims, wherein said housing (2) has a hollow cylindrical shape.

8. DOC module according to any of the preceding claims, comprising locking means configured to selectively fix together said first and second portions (2a, 2b).

9. DOC module according to any of claims 4 to 8, comprising locking means configured to selectively fix together said joint (5) to the respective portion (2a, 2b).

10. Work vehicle comprising an Air Treatment System, ATS provided with a Diesel Oxidation Catalysts, DOC, module (1) according to any of the preceding claims.
